# EUROPEAN PATENT SPECIFICATION

(11) **EP 3 184 600 B1**
(45) Date of publication and mention of the grant of the patent: **30.09.2020**
(21) Application number: 15460136.3
(22) Date of filing: 22.12.2015
(51) Int. Cl.: C09K 3/18

(54) **ECOLOGICAL COMPOSITION FOR DE-ICING OF GROUND INFRASTRUCTURE**
ÖKOLOGISCHE ZUSAMMENSETZUNG ZUR ENTEISUNG VON BODENINFRASTRUKTUR
COMPOSITION ÉCOLOGIQUE POUR LE DÉGIVRAGE D'UNE INFRASTRUCTURE TERRESTRE

(43) Date of publication of application: 28.06.2017
(73) Proprietor: Boryszew S.A. Oddzial Boryszew ERG w Sochaczewie, 96-500 Sochaczew (PL)
(72) Inventor: Banach, Robert, 96-500 Sochaczew (PL); Balcerak, Pawel, 96-500 Sochaczew (PL); Botorowicz-Bogucka, Monika, 96-500 Sochaczew (PL); Czerniejewska, Karolina, 03-922 Warszawa (PL); Ilnicki, Marek, 02-394 Warszawa (PL); Krohn, Marlena, 87-125 Silno (PL); Luczkowska, Dorota, 96-500 Sochaczew (PL)

(56) References cited:
- US-A1- 2009 039 310
- US-A1- 2013 062 554

## Description

The subject of the present invention is an organic composition for de-icing of ground infrastructure, which can be applied to remove icing from ground infrastructure as well as serve as an aircraft-safe agent for de-icing of airport runways, and also a safe agent for de-icing of concrete and tarmac surfaces and motor vehicles, that can be used on: roads, squares, parking lots, sidewalks, cargo terminals, or wharfs.

So far, attempts to develop a formulation of a de-icing composition focused mainly on solving the problem of corrosion protection by the development of optimum inhibitor systems.
Patent application WO 2003033614 discloses a solid de-icing composition consisting of 97.3 - 97.7% wt. of sodium formate and 2.3 - 2.7% wt. of sodium silicate.
US patent 6,059,989 describes a composition consisting of 92.0 - 97.9% by weight of alkali metal acetate and/or formate, 2.0 - 7.0% by weight of alkali metal silicate and 0.1 - 1.0% by weight of alkali metal phosphate.
US patent 6,059,989 describes a de-icing composition consisting of 87.00 - 99.45% by weight of alkali metal acetate and/or formate, 0.50 - 10.00 % by weight of alkali metal silicate and 0.05 - 3.00% wt. of alkali metal phosphate. Corrosion-inhibiting activity of the alkali metal silicate and the alkali metal phosphate is insufficient as far as magnesium-related corrosion is concerned.
Patent specification US 6287480 discloses synergistic systems containing potassium succinate and sodium polyasparaginate in a weight ratio of 97.0 : 3.0 and potassium succinate, magnesium succinate and sodium polyasparaginate in a weight ratio of 95.0 : 4.0: 1.0. The succinic acid salts and sodium polyasparaginate described there exhibit good de-icing properties and, at the same time, anti-corrosion activity.
Also known in the art is the use of aliphatic carboxylic acids C₆-C₁₂ as corrosion inhibitors. Patent application US 20090039310 discloses anticorrosive activity of organic acids such as: n-hexanoic acid, n-octanoic acid, n-decanoic acid, n-dodecanoic acid, 2-ethylhexanoic acid, whereas the composition of the de-icing agent contains 99.40 - 99.94% wt. of alkali earth formate, 0.05 - 0.50% wt. alkali metal silicate and 0.01 - 0.50% wt. of organic acid C₆-C₁₂.

US 2013/062554 A1 relates to a de-icing composition comprising between 95 and 98 wt.% of sodium formate; between 1 and 3.5 wt.% of a silicate, like sodium metasilicate; and between 0.05 and 0.5 wt.% of an organophosphate like disodium hydroxyethylene diphosphonate.

To a limited extent, products such as inorganic salts e.g. sodium chloride, calcium chloride, or urea are used for de-icing, however, the former is highly corrosive and the use of urea creates a burden to the environment.

Data from the literature and a series of tests carried out indicate that a significant problem in the case of solid de-icing compositions is a protection against corrosion of cadmium coated steel parts and chromate conversion-coated magnesium alloys.
Cadmium coated steel panels tested according to ASTM F1111 corrosion test should not exhibit weight changes greater than 0.3 mg/cm²/24h. Acceptable weight change of chromate conversion-coated magnesium alloy panels subjected to immersion corrosion test according to ASTM F483 is, according to AMS 1431D, 0.2 mg/cm²/24 h.

A disadvantage of de-icing compositions consisting of sodium formate, alkali metal metasilicate and alkali metal phosphate is their insufficient (or oscillating about an acceptable limit) corrosion protection in relation to cadmium coated steel parts and chromate conversion-coated magnesium alloys. Adequate protection against corrosion of these parts is managed to achieve using very high concentrations of the metasilicates (usually above 2.5%), however, at that content of this component, the pH of its solutions significantly increases, which adversely affects the tarmac concretes used in airports, and it also causes a decrease in the content of the main component responsible for lowering the solutions' crystallisation temperatures (sodium formate), thus reducing its effectiveness.

The subject of the present invention is an ecological composition for de-icing of ground infrastructure, said composition having the form of a solid.

The ecological de-icing composition for ground infrastructure according to the present invention is characterized in that it consists of 98.00 to 99.38% wt. of sodium formate, from 0.50 to 1.88% wt. of alkali metal metasilicate, from 0.01 to 0.50% wt. of at least one alkaline metal phosphate, from 0.10 to 1.00% wt. of sodium polyasparaginate, and from 0.01 to 0.50% wt. of imidazole.

The ecological composition according to the present invention preferably consists of sodium formate in a quantity from 98.00 to 98.59% wt., alkaline metal metasilicate in a quantity from 1.00 to 1.50% wt., alkaline metal phosphate, preferably trisodium phosphate in a quantity from 0.10 to 0.50% wt., sodium polyasparaginate in a quantity from 0.30 to 0.80% wt., and imidazole in a quantity from 0.01 to 0.20% wt.
Preferably, the alkaline metal metasilicate is sodium or potassium metasilicate.

The advantage of the ecological composition for de-icing of ground infrastructure, according to the invention, is that it does not contain triazole derivatives, nor nitrites or nitrates.
Due to the fact that the composition according to the invention is based on sodium formate, it is safe for metal parts, both untreated and galvanised, and for concrete and tarmac surfaces. For the same reason, it poses little threat to the environment and exhibits a strong ability to biodegrade.

The composition, beside sodium formate, also includes corrosion inhibitors whose proper selection in terms of quality and quantity prevents to the greatest extent possible against any damage and destruction of metal structural components. The composition according to the invention guarantees meeting all the requirements set forth in the applicable standards, including the requirements for immersion corrosion testing and the for the so-called sandwich corrosion tests described in ASTM F1110.

This effect was achieved mainly through the use of an innovative synergistic system consisting of imidazole and sodium polyasparaginate. Thanks to the disclosed interaction of these two compounds, it was possible to particularly improve the corrosion protection of cadmium-coated steel parts and chromate conversion-coated magnesium alloys.

Keeping the total amount of inhibitor package at a level not higher than 2% also made it possible to maintain excellent de-icing properties of the composition.
A 15% wt. solution of the de-icing agent features crystallization temperature not higher than -9°C and pH in the range of 11.0 - 13.0. Flash point of the 15% solution of the de-icing composition is not lower than 93°C.

The composition according to the present invention can be obtained by physically mixing all the ingredients of the composition e.g. in a ribbon belt mixer. The homogenised mixture made this way can be processed into a granulate using a known method. Using a screw feeder, the composition is fed to a compactor, where it is compacted. As a result, a compacted panel is obtained, which is fed to a crusher, where it is comminuted. Product granules are sent to a screener in order to classify them into proper size, oversize and undersize matter. The proper size product is passed to packaging operations. The undersized product is recycled back to the compactor for re-compaction. The oversized product is directed to the crusher, wherefrom, after comminuting, it is recycled to the screener and classified again.

The resulting ecological composition according to the invention is in the form of solid granules. This form of the ecological de-icing agent creates better conditions to absorb moisture after it is spilled on the ground, and to minimize the risk of being blown beyond the edge of the surface to be de-iced by a gust of wind or the engine. The ecological composition according to the invention easily undergoes the processes of compaction, comminution and screening, and the resulting granulate has good mechanical strength that allows for trouble-free transport and the application of the product using classic spreaders.

The ecological composition for de-icing ground infrastructure, according to the invention, is further explained in the following examples which present its embodiments.

**Example I (comparative)**

| | |
|---|---|
| Sodium formate,% wt. | 100.0 |

**Example II (comparative)**

| | |
|---|---|
| Sodium formate,% wt. | 97.45 |
| Sodium metasilicate pentahydrate, % wt. | 2.55 |

**Example III (comparative)**

| | |
|---|---|
| Sodium formate,% wt. | 97.30 |
| Sodium metasilicate pentahydrate, % wt. | 2.50 |
| Trisodium phosphate, % wt. | 0.20 |

**Example IV (comparative)**

| | |
|---|---|
| Sodium formate,% wt. | 99.10 |
| Sodium metasilicate pentahydrate, % wt. | 0.50 |
| Trisodium phosphate, % wt. | 0.30 |
| Imidazole,% wt. | 0.10 |

**Example V (comparative)**

| | |
|---|---|
| Sodium formate,% wt. | 96.70 |
| Sodium metasilicate pentahydrate, % wt. | 2.50 |
| Trisodium phosphate, % wt. | 0.30 |
| Sodium polyasparaginate, % wt. | 0.50 |

**Example VI (according to invention)**

| | |
|---|---|
| Sodium formate,% wt. | 98.00 |
| Sodium metasilicate pentahydrate, % wt. | 1.10 |
| Trisodium phosphate, % wt. | 0.30 |
| Sodium polyasparaginate, % wt. | 0.50 |
| Imidazole,% wt. | 0.10 |

**Example VII (according to invention)**

| | |
|---|---|
| Sodium formate,% wt. | 98.00 |
| Sodium metasilicate pentahydrate, % wt. | 1.15 |
| Trisodium phosphate, % wt. | 0.30 |
| Sodium polyasparaginate, % wt. | 0.50 |
| Imidazole, % wt. | 0.05 |

The above presented de-icing compositions have been subjected to immersion corrosion test according to ASTM F483 and cadmium corrosion test according to ASTM F1111.
Corrosion tests were carried out on all types of test panels provided for in the above standards. The results of the immersion corrosion tests carried out for the following alloys:
- aluminium AMS4037, anodised according to AMS2470,
- aluminium AMS4041
- aluminium AMS4049,
- titanium AMS4911,
- carbon steel AMS5045,
did not exceed the limits specified in the standard SAE AMS 1431D. A problem was corrosion protection of cadmium coated steel parts and a chromate conversion-coated magnesium alloy.
Test panels made of magnesium alloy AZ31B-H26, chromate conversion-coated according to AMS 2475, was immersed in 15% aqueous solutions at a temperature of 38 ± 3°C for a period of 24 hours. Acceptable weight change of the test panels made of chromate conversion coated magnesium alloy is 0.2 mg/cm²/24h. Corrosion test results are presented in Table 1.
Test panels made from 4130 steel complying with SAE-AMS-6345, cadmium coated according to MIL-STD-870, were immersed in aqueous solutions of the de-icing composition having concentration according to the standard ASTM F1111 (1 part by weight of the de-icing composition : 5 parts by weight of demineralised water) at a temperature of 35 ± 1 ° c for a period of 24 hours. Acceptable weight change of the cadmium coated test panels is 0.3 mg/cm²/24h. Corrosion test results are presented in Table 1.

**Table 1. Corrosion test results for chromate conversion coated magnesium alloy panels.**

| **Example** | **Weight change of a test panel made of magnesium alloy in accordance with AMS 4376, chromate conversion coated according to AMS 2475** | **Weight change of a test panel made of 4130 steel complying with SAE-AMS-6345, cadmium coated according to MIL-STD-870** |
|---|---|---|
| | **[mg/cm²/24h]** | **[mg/cm²/24h]** |
| I | -1,59 | -0,17403 |
| II | -0,34 | -0,03571 |
| III | -0,29 | 0,01456 |
| IV | -0,25 | -0,00280 |
| V | -0,23 | -0,00221 |
| VI | -0,16 | -0,00113 |
| VII | -0,07 | 0,00000 |

The test results presented above show insufficient protective activity of sodium metasilicate and trisodium phosphate. A significant increase in the corrosion protection was noted during application of sodium polyasparaginate with imidazole.

## Claims

1. An ecological composition for de-icing of ground infrastructure, **characterized in that** it consists of 98.00 to 99.38% wt. of sodium formate, from 0.50 to 1.88% wt. of alkali metal metasilicate, from 0.01 to 0.50% wt. of at least one alkaline metal phosphate, from 0.10 to 1.00% wt. of sodium polyasparaginate, and from 0.01 to 0.50% wt. of imidazole.

2. The ecological composition according to Claim 1, **characterised in that** it consists of sodium formate in the amount from 98.00 to 98.59% wt.

3. The ecological composition according to Claim 1, **characterised in that** it consists of alkali metal metasilicate in the amount from 1.00 to 1.50% wt.

4. The ecological composition according to Claim 1 or 3, **characterised in that** the alkali metal metasilicate is sodium or potassium metasilicate.

5. The ecological composition according to Claim 1, **characterised in that** it consists of alkali metal phosphate, preferably trisodium phosphate in the amount from 0.10 to 0.50% wt.

6. The ecological composition according to Claim 1, **characterised in that** it consists of sodium polyasparaginate in the amount from 0.30 to 0.80% wt.

7. The ecological composition according to Claim 1, **characterised in that** it consists of imidazole in the amount from 0.01 to 0.20% wt.

## Patentansprüche

1. Ökologische Zusammensetzung zur Enteisung von Bodeninfrastruktur, **dadurch gekennzeichnet, dass** sie aus 98,00 bis 99,38 Gew.-% Natriumformiat, 0,50 bis 1,88 Gew.-% Alkalimetallmetasilikat, 0,01 bis 0,50 Gew.-% mindestens eines Alkalimetallphosphats, 0,10 bis 1,00 Gew.-% Natriumpolyasparaginat und 0,01 bis 0,50 Gew.-% Imidazol besteht.

2. Die ökologische Zusammensetzung nach Anspruch 1, **dadurch gekennzeichnet, dass** sie aus Natriumformiat in der Menge von 98,00 bis 98,59 Gew.-% besteht.

3. Die ökologische Zusammensetzung nach Anspruch 1, **dadurch gekennzeichnet, dass** sie aus Alkalimetallmetasilikat in der Menge von 1,00 bis 1,50 Gew.-% besteht.

4. Die ökologische Zusammensetzung nach Anspruch 1 oder 3, **dadurch gekennzeichnet, dass** das Alkalimetallmetasilikat aus Natrium- oder Kaliummetasilikat besteht.

5. Die ökologische Zusammensetzung nach Anspruch 1, **dadurch gekennzeichnet, dass** sie aus Alkalimetallphosphat, vorzugsweise Trinatriumphosphat, in einer Menge von 0,10 bis 0,50 Gew.-% besteht.

6. Die Ökologische Zusammensetzung nach Anspruch 1, **dadurch gekennzeichnet, dass** sie aus Natriumpolyasparaginat in einer Menge von 0,30 bis 0,80 Gew.-% besteht.

7. Die ökologische Zusammensetzung nach Anspruch 1, **dadurch gekennzeichnet, dass** sie aus Imidazol in einer Menge von 0,01 bis 0,20 Gew.-% besteht.

## Revendications

1. Une composition écologique pour le dégivrage d'infrastructures terrestres, **caractérisée en ce qu'**elle est constituée de 98,00 à 99,38 % en poids de formiate de sodium, de 0,50 à 1,88 % en poids de métasilicate de métal alcalin, de 0,01 à 0,50 % en poids d'au moins un phosphate de métal alcalin, de 0,10 à 1,00 % en poids de polyasparaginate de sodium, et de 0,01 à 0,50 % en poids d'imidazole.

2. La composition écologique selon la revendication 1, **caractérisée en ce qu'**elle est constituée de formiate de sodium en quantité de 98,00 à 98,59 % en poids.

3. La composition écologique selon la revendication 1, **caractérisée en ce qu'**elle est constituée de métasilicate de métal alcalin en quantité de 1,00 à 1,50 % en poids.

4. La composition écologique selon la revendication 1 ou 3, **caractérisée en ce que** le métasilicate de métal alcalin est un métasilicate de sodium ou de potassium.

5. La composition écologique selon la revendication 1, **caractérisée en ce qu'**elle est constituée de phosphate de métal alcalin, de préférence de phosphate trisodique en quantité de 0,10 à 0,50 % en poids.

6. La composition écologique selon la revendication 1, **caractérisée en ce qu'**elle est constituée de polyasparaginate de sodium en quantité de 0,30 à 0,80 % en poids.

7. La composition écologique selon la revendication 1, **caractérisée en ce qu'**elle est constituée d'imidazole en quantité de 0,01 à 0,20 % en poids.
